# EUROPEAN PATENT SPECIFICATION

(11) **EP 3 371 452 B1**
(45) Date of publication and mention of the grant of the patent: **04.03.2020**
(21) Application number: 15791589.3
(22) Date of filing: 06.11.2015
(51) Int. Cl.: F04B 27/10, H01R 9/24, F04B 35/04, F04B 39/12, F04B 39/14, H02K 5/22

(54) **INVERTER BOARD ASSEMBLY FOR USE WITH A HERMETIC COMPRESSOR**
UMRICHTERPLATINENANORDNUNG ZUR VERWENDUNG MIT EINEM HERMETISCHEN VERDICHTER
ENSEMBLE CARTE D'ONDULEUR DESTINÉ À ÊTRE UTILISÉ AVEC UN COMPRESSEUR HERMÉTIQUE

(43) Date of publication of application: 12.09.2018
(73) Proprietor: Arçelik Anonim Sirketi, 34445 Istanbul (TR)
(72) Inventor: GUNAYDIN, Metin, 34950 Istanbul (TR); OZKAN, Erkan, 34950 Istanbul (TR)
(86) International application number: PCT/EP2015/075914
(87) International publication number: WO 2017/076465

(56) References cited:
- EP-A1- 0 793 068
- EP-A1- 1 111 316
- EP-A1- 2 894 333
- WO-A1-2007/012961
- GB-A- 2 288 082
- US-A1- 2004 027 790
- US-B1- 6 375 439

## Description

The present invention relates to a variable capacity hermetic compressor for use in a refrigeration appliance such as a domestic refrigerator. The present invention more particularly relates to the inverter board assembly of the hermetic compressor.

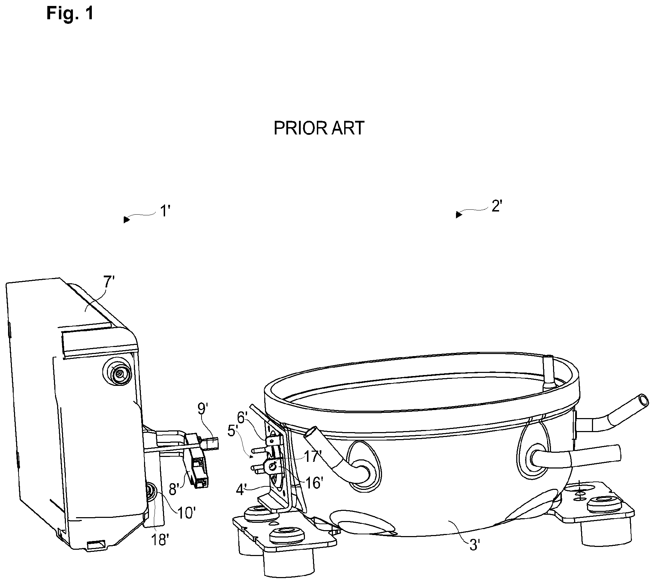

Hermetic compressors with variable capacity are commonly known in the art. Fig. 1 shows an inverter board assembly (1') and a hermetic compressor (2') which are known from the prior art. The hermetic compressor (2') comprises a casing (3') for hermetically accommodating the compressor-kit (not shown), a bracket (4') which is disposed onto the casing (3') and adapted for the attachment of the inverter board assembly (1') and a terminal socket (5') and a grounding socket (6') which are disposed onto the casing (3'). The inverter board assembly (1') comprises a housing (7') for accommodating the inverter board (not shown); a terminal plug (8') for the connection with the terminal socket (5'), wherein the terminal plug (8') is flexibly connected to the terminal board via a cable harness and a grounding plug (9') for the connection with the grounding socket (6'), wherein the grounding plug (9') is flexibly connected to the terminal board via a cable and an attachment means (10') for attaching the housing (7') to the bracket (4'). When assembling the inverter board assembly (1') with the hermetic compressor (2'), the assembly operator first connects the terminal plug (8') with the terminal socket (5'), then connects the grounding plug (9') with the grounding socket (6'), and finally attaches the housing (7') to the bracket (4').

CA1172325A1 discloses a prior art hermetic compressor.

WO2007012961 discloses an integrated terminal board device for installation on a terminal having pin contacts, in particular for compressors.

EP2894333 discloses a prior art electric compressor.

GB2288082 discloses a terminal board which is suitable for electrically supplying the sealed compressor of a refrigerator.

EP0793068 discloses a supply and protection device for a hermetic compressor of a refrigeration machine.

A problem with the prior art hermetic compressor (2') is that the terminal plug (8') and the grounding plug (9') may become loose or come off after the housing (7') has been attached to the bracket (4') for one reason or another. Such instances may occur, for example, during the transportation. Another problem with the prior art hermetic compressor (2') is that the assembly operator may fail to completely connect or may even entirely forget to connect one or both of the terminal plug (8') and the grounding plug (9') respectively with the terminal socket (5') and the grounding socket (6') prior to attaching the housing (7') to the bracket (4'). In the aforementioned instances, the failure cannot be detected with certainty by a visual inspection as the housing (7') conceals the terminal plug (8') and the grounding plug (9').

An objective of the present invention is to provide an inverter board assembly and a hermetic compressor which solves the aforementioned problems of the prior art in a cost-effective way and which enables an improved production and assembly.

This objective has been achieved by the inverter board assembly as defined in claim 1, the hermetic compressor as defined in claim 3, and the refrigeration appliance as defined in claim 5. Further achievements have been attained by the subject-matters respectively defined in the dependent claims.

The inverter board assembly of the present invention further comprises a first fixing means which is adapted to fix the terminal plug to the housing in the position which faces the terminal socket and a second fixing means which is adapted to fix the grounding plug to the housing in the position which faces the grounding socket, wherein the terminal plug and the grounding plug are respectively adapted to get connected to the terminal socket and the grounding socket upon attachment of the housing to the bracket.

A major advantageous effect of the present invention is that the assembly operator can simultaneously connect the terminal plug and the grounding plug respectively to the terminal socket and grounding socket while attaching the housing to the bracket. Thereby, the risk of forgetting to connect any one of the terminal plug and the grounding plug has been eliminated. Thereby, the risk of incompletely connecting the terminal plug and the grounding plug has also been eliminated. Moreover, the risk of loosening or coming off of the terminal plug and the grounding plug has also been eliminated. With the present invention, the inverter board assembly can be reliably and quickly assembled with the hermetic compressor, and thus the overalls cots can be reduced both in terms of labor and material.

In alternative embodiments, the first fixing means comprises a first form-fitting connection and/or a first force-fitting connection. In another embodiment, the first form-fitting connection is provided as a first snap connection. In another embodiment, the first snap connection comprises a first recess which receives the terminal plug, and at least a first claw which secures the terminal plug to the first recess. These embodiments are particularly advantageous as the terminal plug can be easily and safely fixed to the housing of the inverter board assembly.

In other alternative embodiments, the second fixing means comprises a second form-fitting connection and/or a second force-fitting connection. In another embodiment, the second form-fitting connection is provided as a second snap connection. In another embodiment, the second snap connection comprises a second recess which receives grounding plug, and at least a second claw which secures the grounding plug to the second recess. These embodiments are particularly advantageous as the grounding plug can be easily and safely fixed to the housing of the inverter board assembly.

In other alternative embodiments, the attachment means comprises a third form-fitting connection and/or a third force-fitting attachment. In another embodiment, the third form-fitting connection is provided as a third snap connection. In another embodiment, the third force-fitting connection is provided as a screw connection. In another embodiment, the bracket has a tab with a first screw hole, and the screw connection comprises a second screw hole on the housing which joins the first screw hole through a screw. These embodiments are particularly advantageous as the housing of the inverter board assembly can be easily and safely attached to the bracket of the hermetic compressor.

In another embodiment, the attachment means, the first fixing means and the second fixing means are integrally formed with the housing of the inverter board assembly. The housing may be produced by plastic injection molding. This embodiment is particularly advantageous as the number of parts can be decreased, and thus the production and assembly can be further simplified, and the overall costs can be further reduced both in terms of labor and material.

Additional features and additional advantageous effects of the inverter board assembly and the hermetic compressor of the present invention will become more apparent with the detailed description of the embodiments with reference to the accompanying drawings in which:
Figure 1 - is a schematic perspective view of an inverter board assembly prior to the attachment to the bracket of a hermetic compressor according to the prior art;
Figure 2 - is a schematic perspective view of an inverter board assembly prior to the attachment to the bracket of a hermetic compressor according to an embodiment of the present invention, wherein the double sided arrow shows a detachment/attachment direction;
Figure 3 - is another schematic perspective view of the inverter board assembly prior to the attachment to the bracket of the hermetic compressor according to an embodiment of the present invention;
Figure 4 - is a schematic perspective view of the inverter board assembly after having been attached to the bracket of the hermetic compressor according to an embodiment of the present invention.

The reference signs appearing on the drawings relate to the following technical features.
- 1.: Inverter board assembly
- 2.: Hermetic compressor
- 3.: Casing
- 4.: Bracket
- 5.: Terminal socket
- 6.: Grounding socket
- 7.: Housing
- 8.: Terminal plug
- 9.: Grounding plug
- 10.: Attachment means
- 11.: 1^{st} fixing means
- 12.: 2^{nd} fixing means
- 13.: 1^{st} recess
- 14.: 1^{st} claw
- 15.: 2^{nd} recess
- 16.: Tab
- 17.: 1^{st} screw hole
- 18.: 2^{nd} screw hole

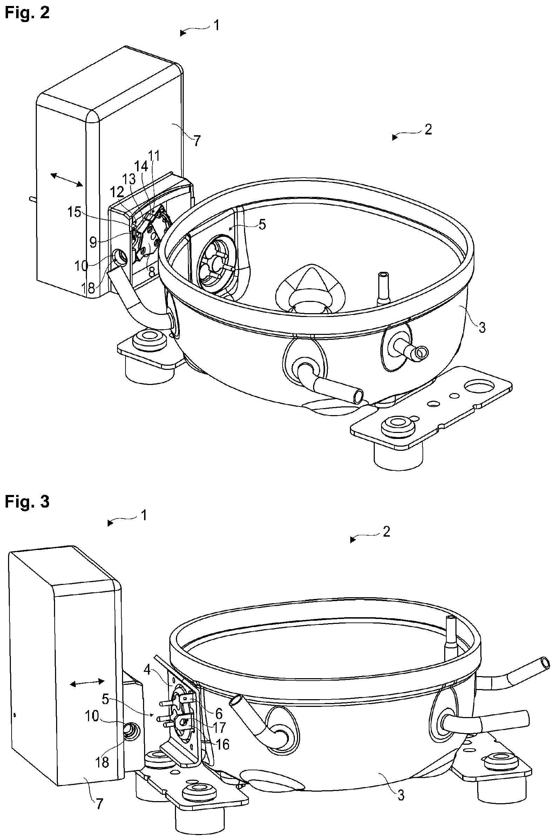

The inverter board assembly (1) is suitable for use in a hermetic compressor (2) (Fig. 2 to 4).

The hermetic compressor (2) comprises a casing (3) for hermetically accommodating the compressor-kit (not shown); a bracket (4) which is disposed onto the casing (3) and adapted for the attachment of the inverter board assembly (1) and a terminal socket (5) and a grounding socket (6) which are disposed onto the casing (3) (Fig. 3).

The inverter board assembly (1) comprises a housing (7) for accommodating the inverter board (not shown); a terminal plug (8) for the connection with the terminal socket (5); a grounding plug (9) for the connection with the grounding socket (6) and an attachment means (10) for attaching the housing (7) to the bracket (4) (Fig. 2).

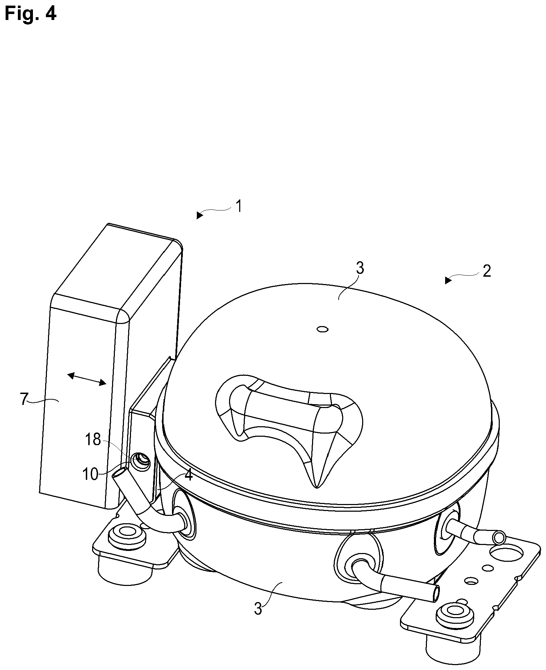

The inverter board assembly (1) of the present invention further comprises a first fixing means (11) which is adapted to fix the terminal plug (8) to the housing (7) in the position which faces the terminal socket (5) and a second fixing means (12) which is adapted to fix the grounding plug (9) to the housing (7) in the position which faces the grounding socket (6) (Fig. 2 and Fig. 3). In the inverter board assembly (1) of the present invention, the terminal plug (8) and the grounding plug (9) are respectively adapted to get connected to the terminal socket (5) and the grounding socket (6) upon attachment of the housing (7) to the bracket (4) (Fig. 4).

The hermetic compressor (2) of the present invention comprises the inverter board assembly (1) (Fig. 4).

The refrigeration appliance (not shown) of the present invention comprises the hermetic compressor (2).

In the present invention, the first fixing means (11) comprises a first recess (13) which is formed into the housing (7) and adapted to receive the terminal plug (8). In this embodiment, the first fixing means (11) also comprises one or more first claws (14) each adapted to secure the terminal plug (8) into the first recess (13) (Fig. 2).

In the present invention, the second fixing means (12) comprises a second recess (15) which is formed into the housing (7) and adapted to receive the grounding plug (9). In this embodiment, the second fixing means (12) further comprises one or more second claws (not shown) each adapted to secure the grounding plug (9) into the second recess (15) (Fig. 2).

In another embodiment, the bracket (4) has a tab (16) with a first screw hole (17). In this embodiment, the attachment means (10) comprises a second screw hole (18) which is disposed onto the housing (7) and adapted to join the first screw hole (17) through a screw (not shown) (Fig. 3).

A major advantageous effect of the present invention is that the assembly operator can simultaneously connect the terminal plug (8) and the grounding plug (9) respectively to the terminal socket (5) and grounding socket (6) while attaching the housing (7) to the bracket (4) (Fig. 2 and Fig. 3). Thereby, the risk of forgetting to connect any one of the terminal plug (8) and the grounding plug (9) has been eliminated (Fig. 4). Thereby, the risk of incompletely connecting the terminal plug (8) and the grounding plug (9) has also been eliminated (Fig. 4). Moreover, the risk of loosening or coming off of the terminal plug (8) and the grounding plug (9) has also been eliminated (Fig. 4). With the present invention, the inverter board assembly (1) can be reliably and quickly assembled with the hermetic compressor (2), and thus the overall cots can be reduced both in terms of labor and material.

## Claims

1. An inverter board assembly (1) for use with a hermetic compressor (2), the hermetic compressor (2) comprising a casing (3) for hermetically accommodating a compressor-kit, a bracket (4) which is disposed onto the casing (3) and adapted for the attachment of the inverter board assembly (1); a terminal socket (5) and a grounding socket (6) which are disposed onto the casing (3), the inverter board assembly (1) comprising a housing (7) for accommodating the inverter board, a terminal plug (8) for the connection with the terminal socket (5), a grounding plug (9) for a connection with the grounding socket (6) and an attachment means (10) for attaching the housing (7) to the bracket (4), the inverter board assembly (1) **characterized in that** a first fixing means (11) which is adapted to fix the terminal plug (8) to the housing (7) in a position which faces the terminal socket (5) and which comprises a first recess (13) which is formed into the housing (7) and adapted to receive the terminal plug (8) and one or more first claws (14) each adapted to secure the terminal plug (8) into the first recess (13) and a second fixing means (12) which is adapted to fix the grounding plug (9) to the housing (7) in a position which faces the grounding socket (6) and which comprises a second recess (15) which is formed into the housing (7) and adapted to receive the grounding plug (9) and one or more second claws each adapted to secure the grounding plug (9) into the second recess (15), wherein the terminal plug (8) and the grounding plug (9) are respectively adapted to get connected to the terminal socket (5) and the grounding socket (6) upon attachment of the housing (7) to the bracket (4).

2. The inverter board assembly (1) according to claim 1, wherein the bracket (4) has a tab (16) with a first screw hole (17), the inverter board assembly (1) **characterized in that** the attachment means (10) comprises a second screw hole (18) which is disposed onto the housing (7) and adapted to join the first screw hole (17) through a screw.

3. A hermetic compressor (2) comprising a casing (3) for hermetically accommodating a compressor-kit, a bracket (4) which is disposed onto the casing (3) and adapted for the attachment of the inverter board assembly (1) and a terminal socket (5) and a grounding socket (6) which are disposed onto the casing (3), **characterized in that** the hermetic compressor (2) further comprises the inverter board assembly (1) as defined in any one of claims 1 or 2.

4. A refrigeration appliance **characterized in that** refrigeration appliance comprises the hermetic compressor (2) as defined in claim 3.

## Patentansprüche

1. Eine Wechselrichterplatinenanordnung (1) für die Verwendung mit einem hermetischen Kompressor (2); der hermetische Kompressor (2) umfasst ein Gehäuse (3) für die hermetische Aufnahme eines Kompressorsatzes und einen Träger (4), die auf dem Gehäuse (3) angeordnet ist und für die Befestigung der Wechselrichterplatinenanordnung (1) ausgelegt ist; eine Anschlussbuchse (5) und eine Erdungsbuchse (6), die auf dem Gehäuse (3) angeordnet sind; die Wechselrichterplatinenanordnung (1) weist ein Gehäuse (7) zur Aufnahme der Wechselrichterplatine auf; einen Anschlußstecker (8) für die Verbindung mit der Anschlußbuchse (5), einen Erdungsstecker (9) für die Verbindung mit der Erdungsbuchse (6) und ein Befestigungsmittel (10) für die Befestigung des Gehäuses (7) an dem Träger (4); die Wechselrichterplatinenanordnung (1) ist **dadurch gekennzeichnet, dass** ein erstes Befestigungsmittel (11), die dafür geeignet ist, den Anschlussstecker (8) mit dem Gehäuse (7) in einer Position fixiert zu werden, der die Anschlußbuchse (5) und eine erste Aussparung (13) aufweist, die in das Gehäuse (7) gebildet sind für die Aufnahme des Anschlusssteckers (8) und einer oder mehrerer erster Klauen (14), die jeweils zur Sicherung des Anschlusssteckers (8) in der ersten Aussparung (13) ausgelegt sind und ein zweites Befestigungsmittel (12), das dazu ausgelegt ist, den Erdungsstecker (9) an dem Gehäuse (7) in einer Position zu befestigen, die der Erdungsbuchse (6) zugewandt ist und die eine zweite Aussparung (15) aufweist, die in das Gehäuse (7) ausgebildet ist und für die Aufnahme des Erdungssteckers (9) geeignet ist und eine oder mehrere zweite Krallen (9) in die zweite Aussparung (15), wobei der Anschlussstecker (8) und der Erdungsstecker (9) jeweils mit der angeschlossenen Buchse (5) verbunden sind und die Erdungsbuchse (6) beim Anbringen des Gehäuses (7) an dem Träger(4) zu befestigen.

2. Die Wechselrichterplatinenanordnung (1), wie in Anspruch 1 aufgeführt, wobei der Träger (4) eine Lasche (16) mit einem ersten Schraubenloch (17) aufweist; die Wechselrichterplatinenanordnung (1) **ist dadurch gekennzeichnet, dass** das Befestigungsmittel (10) ein zweites Schraubenloch (18) aufweist, das an dem Gehäuse (7) angeordnet ist und dazu ausgelegt ist, das erste Schraubenloch (17) durch eine Schraube zu verbinden.

3. Ein hermetischer Kompressor (2) umfasst ein Gehäuse (3) für die hermetische Aufnahme eines Kompressorsatzes, einen Träger (4), die auf dem Gehäuse (3) angeordnet ist und für die Befestigung der Wechselrichterplatinenanordnung (1) und eines Anschlusses ausgelegt ist und eine Anschlussbuchse (5) und Erdungsbuchse (6), die auf dem Gehäuse (3) angeordnet sind; **gekennzeichnet ist er durch** das hermetische Kompressor (2), das ferner die Wechselrichterplatinenanordnung (1) nach einem der Ansprüche 1 oder 2 umfasst.

4. Ein Kühlgerät **ist dadurch gekennzeichnet, dass** es den hermetischen Kompressor (2) nach Anspruch 3 umfasst.

## Revendications

1. Un montage de carte d'onduleur (1) destiné à être utilisé avec un compresseur hermétique (2), le compresseur hermétique (2) comprenant un carter (3) pour recevoir hermétiquement un kit de compresseur, un support (4) qui est disposé sur le carter (3) et adapté pour la fixation du montage de carte d'onduleur (1) ; une prise de borne (5) et une prise de terre (6) qui sont disposées sur le boîtier (3), l'ensemble de carte d'onduleur (1) comprenant un logement (7) pour recevoir la carte d'onduleur, une fiche de borne (8) pour la connexion avec la prise de borne (5), une fiche de terre (9) pour une connexion avec la prise de terre (6) et un moyen de fixation (10) pour fixer le logement (7) au support (4), montage de carte d'onduleur (1), **est caractérisé en ce qu'**un premier moyen de fixation (11) qui est adapté pour fixer la fiche de connexion (8) au boîtier (7) dans une position qui fait face à la prise de connexion (5) et qui comprend un premier évidement (13) qui est formé dans le boîtier (7) et adapté pour recevoir la fiche de connexion (8) et une ou plusieurs premières griffes (14) chacune adaptée pour fixer la fiche de connexion (8) dans le premier évidement (13) et un second moyen de fixation (12) qui est adapté pour fixer la fiche de terre (9) au boîtier (7) dans une position qui fait face à la douille de terre (6) et qui comprend un second évidement (15) qui est formé dans le boîtier (7) et adapté pour recevoir la fiche de terre (9) et une ou plusieurs secondes griffes adaptées chacune pour fixer la fiche de terre (9) dans le second évidement (15), dans lequel la fiche de borne (8) et la fiche de terre (9) sont respectivement adaptées pour être connectées à la douille de borne (5) et à la douille de terre (6) lors de la fixation du boîtier (7) au support (4).

2. Le montage de carte d'onduleur (1) selon la déclaration 1, dans lequel le support (4) a une patte (16) avec un premier trou de vis (17), le montage de carte d'onduleur (1) **est caractérisé en ce que** le moyen de fixation (10) comprend un deuxième trou de vis (18) qui est disposé sur le boîtier (7) et adapté pour relier le premier trou de vis (17) par une vis.

3. Un compresseur hermétique (2) comprenant un carter (3) pour recevoir hermétiquement un kit de compresseur, un support (4) qui est disposé sur le carter (3) et adapté pour la fixation de l'ensemble de carte d'onduleur (1) et une prise terminale (5) et une prise de terre (6) qui sont disposées sur le carter (3), **est caractérisé en ce que** le compresseur hermétique (2) comprend en outre le montage de carte d'onduleur (1) tel que défini dans l'une quelconque des déclarations 1 ou 2.

4. Un appareil de réfrigération **est caractérisé en ce que** l'appareil de réfrigération comprend le compresseur hermétique (2) tel que défini dans la déclaration 3.
